# EUROPÄISCHE PATENTANMELDUNG

(11) **EP 1 530 354 A2**
(43) Veröffentlichungstag der Anmeldung: **11.05.2005**
(21) Anmeldenummer: 04024176.2
(22) Anmeldetag: 11.10.2004
(51) Int. Cl.: H04M 3/38, H04M 3/42

(54) **Zertifizierte Anrufe**

(30) Priorität: 07.11.2003 DE 10352087
(71) Anmelder: Deutsche Telekom AG, 53113 Bonn (DE)
(72) Erfinder: Brackmann, Ludwig, Dipl.-Ing., 53225 Bonn (DE); Moussa, Hatim, 10117 Berlin (DE)

(57) **Zusammenfassung**

Verfahren zur Authentifikation eines ersten Teilnehmers 1 gegenüber einem mit dem ersten Teilnehmer 1 in Kommunikationsverbindung befindlichen zweiten Teilnehmer 2, wobei sich einer der Teilnehmer unter Vorgabe der Kennung des anderen Teilnehmers mittels eines Endgerätes in ein Kommunikationsnetz einwählt und wobei über das Netz eine Verbindung zum Endgerät des anderen Teilnehmers aufgebaut wird, wobei ein im Netz befindliches Authentifikationsmittel 3,4 angewählt wird, in dem persönliche Daten des ersten Teilnehmers 1 hinterlegt sind, dass das Authentifikationsmittel 3,4 im Rahmen der Verbindung zur Identifikation geeignete Daten des ersten Teilnehmers aufnimmt und durch einen Vergleich mit den gespeicherten Daten seine Identität abgleicht und dass das Authentifikationsmittel 3,4 dem zweiten Teilnehmer 2 die Identität des ersten Teilnehmers 1 bestätigt.

## Beschreibung

Die vorliegende Erfindung betrifft ein Verfahren zur Authentifikation eines ersten Teilnehmers gegenüber einem mit diesem in Kommunikationsverbindung stehenden zweiten Teilnehmer, wobei sich einer der Teilnehmer unter Vorgabe der Kennung des anderen Teilnehmers mittels eines Endgerätes in ein Kommunikationsnetz einwählt und wobei über das Netz eine Verbindung zum Endgerät des anderen Teilnehmers aufgebaut wird. Die Erfindung betrifft gleichfalls ein System zur Umsetzung des Verfahrens.

Generell identifizieren sich beide Partner innerhalb eines Telephongespräches schon allein dadurch, dass dem einen die Stimme des anderen bekannt ist. Allerdings kann jeder der beiden mehr oder weniger leicht durch eine Imitation der Stimme des anderen getäuscht werden. Meist kann der Anrufer jedoch davon ausgehen, dass der Angerufene durch die Anwahl der ihm zugeordneten Netzkennung hinreichend identifiziert ist. Wenn dem Angerufenen jedoch die Stimme des Anrufers nicht persönlich bekannt ist, so muss sich der Anrufer legitimieren. Dabei hat der Angerufene die Möglichkeit, Daten abzufragen, die dem Anrufer mehr oder weniger gut zuzuordnen sind und die eigentlich nur dieser wissen sollte. Beispielsweise kann sich ein Kunde bei einem Anruf durch die Vorgabe seiner Kundennummer identifizieren.

Meist sind die Informationen, die ein Anrufer durch Angabe solcher leicht zugänglicher Daten bekommt, vergleichsweise "ünkritisch" und enthalten kaum persönliche Informationen. Dennoch kommt es immer wieder vor, dass beispielsweise Mitarbeiter des Finanzamtes persönliche Daten herausgeben, nachdem sich der Anrufer durch Angabe der auf jedem Geschäftsbrief ablesbaren Steuernummer "identifiziert" hat. Eine sichere und dennoch leicht handhabbare Authentifikation ist offensichtlich durch die bislang bekannten Verfahren nicht gegeben.

Für eine elektronische Signatur von Dokumenten oder zur Authentifizierung von Online-Kunden sind zudem umständliche Schlüsselverfahrens bekannt, bei denen sich Signierender und Überprüfender bei einem Trust Center verifizieren müssen. Dennoch besteht nach wie vor das Problem der eindeutigen Authentifizierung des Absenders respektive des Kunden.
Aufgabe der vorliegenden Erfindung ist es daher, ein Verfahren zur sicheren Authentifikation eines beiden Teilnehmer zu schaffen, das sich kostengünstig mit einfachen Mitteln realisieren lässt und das Möglichkeiten zur vollständigen Automatisierung bietet. Außerdem ist es Aufgabe der Erfindung ein System zur Umsetzung des Verfahrens zu schaffen.

Diese Aufgaben werden mit einem Verfahren nach Anspruch 1 und einem System nach Anspruch 12 gelöst.

Der wesentliche Gedanke der Erfindung liegt in einem unabhängigen Mittel, das in die Leitung geschaltet wird und das den einen Teilnehmer gegenüber dem anderen Teilnehmer sicher authentifizieren kann, da es ihn gewissermaßen persönlich "kennt". Dieses über das Netz zugängliche Authentifikationsmittel, in dem zur sicheren Identifikation geeignete und "fälschungssichere" persönliche Daten des zu authentifizierenden Teilnehmers hinterlegt sind, kann schon bei der Einwahl des Absenders in das Netz oder nach Bedarf bei bestehender Verbindung angewählt werden. So kann die Anwahl des Mittels gezielt durch einen der beiden Partner erfolgen, wenn in dem folgenden Gespräch der Austausch persönlicher Daten beabsichtigt ist. Erfindungsgemäß werden zur Authentifikation die Daten des zu authentifizierenden Teilnehmers durch das Mittel aufgenommen und mit dem gespeicherten Datensatz abgeglichen. Nach erfolgreichem Abgleich, kann das Authentifikationsmittel die Identität des entsprechenden Teilnehmers gegenüber dem anderen Teilnehmer zertifizieren.

Die Vorteile des erfindungsgemäßen Verfahrens liegen auf der Hand: So kann je nach Art der zur Authentifikation verwendeten Daten mit dem Verfahren eine vergleichsweise sichere Authentifikation eines der Teilnehmer gewährleistet werden. Vor allem lässt sich das Verfahren relativ leicht mit den vorhandenen Mitteln umsetzen. Das Verfahren lässt sich dort einsetzen, wo für den Zugriff auf sicherheitsrelevante Dienstleistungen die Authentifizierung des Kunden zwingend erforderlich ist. Mit der Erfindung ist ein rechtsverbindliches Zertifikat geschaffen, um bei Behörden Rechtsgeschäfte per Sprachanruf zu erledigen.

In einer vorteilhaften Ausführungsform des Verfahrens wird das Einschalten des Authentifikationsmittels in die Leitung zwischen beiden Teilnehmern automatisch vorgenommen. So kann die Anwahl des Mittels beispielsweise beim Aufbau der Verbindung geschehen, da zu diesem Zeitpunkt einerseits die Netzkennung des Absenders sowie des Adressaten bekannt sind. Dabei kann das Mittel von einem im Netz befindlichen zentralen Rechner (Server) realisiert sein, der für eine Vielzahl von Teilnehmern eine Art mit den persönlichen Daten bestückte Netzbox (nachfolgend auch ID-Box genannt) verwaltet. Diese Box ist der Netzkennung des jeweiligen Teilnehmers zugeordnet. Dabei ist es möglich, die Authentifikation nicht unmittelbar über die Box abzuwickeln, sondern die zur Authentifikation benötigten Aktionen über ein Trust-Center vorzunehmen, in dem die relevanten Daten gespeichert sind und das den Abgleich vornimmt. Die Box dient dann lediglich als Knoten in der vom Absender aufgebauten Verbindung und kann in dieser Rolle auch noch weitere Funktionen, beispielsweise die einer Telephonvermittlung, übernehmen.

Da das erfindungsgemäße Verfahren vorteilhafterweise zur Authentifikation des Absenders gegenüber dem Adressaten eingesetzt werden wird, könnte die zur Zertifizierung geeignete Box automatisch angewählt werden, sobald der Anrufer durch Anwahl einer Netzkennung eine Verbindung aufbaut. Sicherlich wird ein bevorzugter Einsatz der Erfindung in der fernmündlichen Kommunikation liegen, da beispielsweise in der Kommunikation via E-mail andere Verfahren zur (De-) Codierung respektive zur Authentifikation möglich sind.

Bei der Kommunikation über ein Netz, insbesondere ein Telephonnetz oder das Internet, wird als vorteilhaftes Medium zur persönlichen Authentifikation die Stimme des Teilnehmers, derer er sich zwangsläufig im Rahmen der fernmündlichen Kommunikation bedienen muss, verwendet. Dabei ist die biologische Einzigartigkeit der Stimme so individuell wie ein Fingerabdruck des Teilnehmers. Insbesondere hat jede Stimme ihr eigenes wiedererkennbares Klangbild. Gerade dieses Klangbild soll erfindungsgemäß genutzt werden, um die Verifizierung respektive die Authentifizierung zu ermöglichen. Vorteilhafterweise wird zur Ermöglichung der Verifizierung in einer Trainingsphase ein Stimmabdruck des Teilnehmers erstellt, der die spezifischen Eigenschaften repräsentiert. Dazu bespricht der Teilnehmer die Netzbox, wobei die Sprache durch ein auf dem Server installiertes Erkennungsprogramm analysiert wird. Die Ergebnisse der Analyse werden anhand charakteristischer Parameter in der ID-Box als Authentifikationsmittel für den späteren Vergleich gespeichert. Als Mittel zur Authentifikation ist auch die Verwendung anderer biometrischer Daten denkbar.

Im Rahmen einer Initialisierung muss sichergestellt werden, dass eine ID-Box genau einer Person zugeordnet werden kann. Da die herkömmliche Beziehung zwischen dem Netzbetreiber und dem Kunden eine solche eindeutige Zuordnung nicht gewährleisten kann, geschieht dieser Ident-Prozess vorteilhafterweise im direkten persönlichen Kontakt und nach Vorlage eines Identifikationsmittels, z.B. des Personalausweises. Will der Teilnehmer nunmehr einen zertifizierten Anruf tätigen, eine zertifizierte E-Mail, SMS, VMS, MMS oder ein zertifiziertes Fax senden oder eine Transaktion online abschließen, wählt er sich in seine ID-Box ein und authentifiziert sich mittels seiner Stimme.

Vorteilhafterweise wählt er die Zielrufnummer per Voice oder per Tasteneingabe an und die Verbindung zu dem Gesprächspartner wird aus der Box heraus aufgebaut. Der Angerufene erhält von der Box eine Zertifizierungsmitteilung, die beispielsweise den Namen, die Adresse, oder die Personalausweisnummer beinhalten kann. Die Zertifizierungsmitteilung kann auf beliebige andere Weise zugestellt werden: So ist es möglich, dass sich die ID-Box mit einer synthetischen Stimme vor oder während des Aufbaus der Verbindung beim Angerufenen meldet. Auch eine per Fax oder auf andere Weise (z. B. in einem sicheren Browserfenster) parallel zur bestehenden Verbindung übermittelte Nachricht ist möglich. Der Empfänger einer E-Mail kann ein Zertifikat im Anhang der E-Mail erhalten.

In einem anderen Ausführungsbeispiel werden E-Mails in der ID-Box abgelegt, respektive von der Box zurückgehalten. Die Versendung geschieht erst dann, wenn der Teilnehmer die Box angewählt und sich gegenüber der Box identifiziert hat. Erfindungsgemäß signiert der Teilnehmer gewissermaßen die E-Mail oder die Transaktion durch seinen Stimmabdruck.

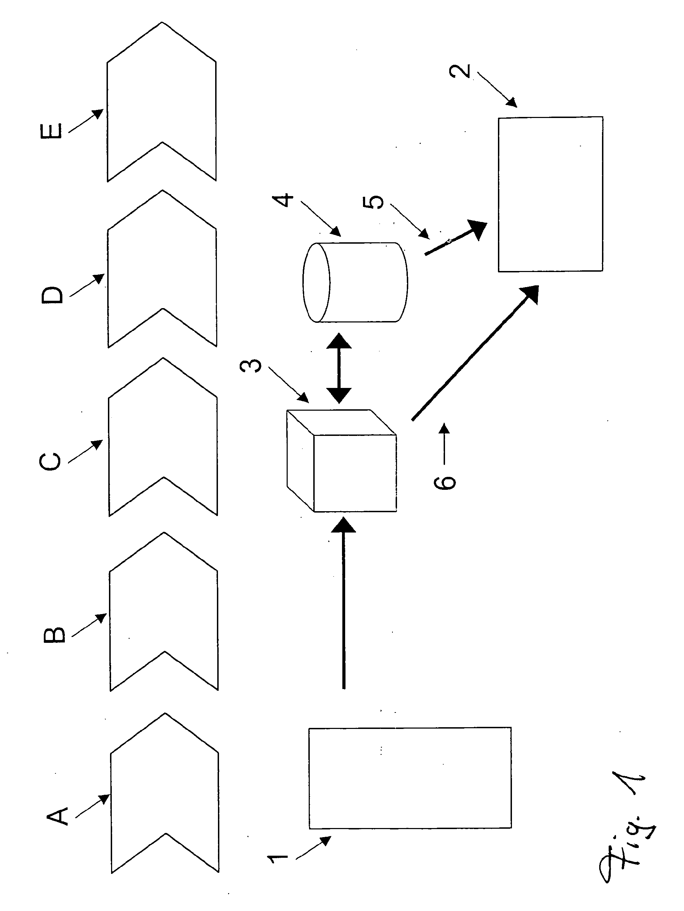

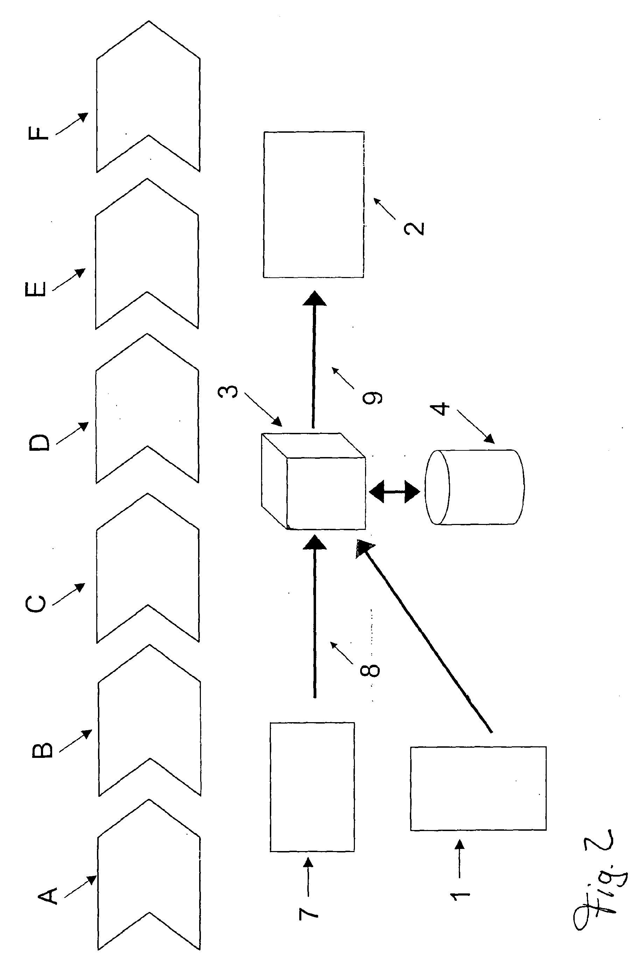

Nachfolgend sind zwei Ausführungsbeispiele der Erfindung anhand der Figuren 1 und 2 näher dargestellt. Es zeigen:
- **Figur 1**: ein Schema zur Zertifizierung von Anrufen und
- **Figur 2**: die Zertifizierung von Transaktionen, Faxen oder E-Mails.

Figur 1 stellt schematisch eine Anwendung der Erfindung dar, bei der ein erster Teilnehmer 1 eine Verbindung zu einem zweiten Teilnehmer 2 aufbaut. Beispielsweise kann es sich dabei um den Anruf des Kunden 1 bei seiner Bank 2 handeln, wobei der Kunde durch den Anruf seine Kontostände abfragen möchte. In die Leitung ist die Netzbox 3 geschaltet, die der Kunde automatisch durch die Wahl der Netzkennung der Bank anwählt (Schritt A). Die Netzbox 3 wendet sich nun im nächsten Schritt B an das Trust Center 4 und schaltet die Stimme des Teilnehmers 1 dorthin durch. Im Trust Center 4 sind die für den Abgleich und damit für die Authentifikation relevanten Daten, insbesondere die Stimmprobe, gespeichert. Das Trust Center 4 nimmt den Abgleich vor und leitet im Fall der erfolgreichen Authentifikation das Ergebnis als Zertifikat auf einem Weg 5 an den Teilnehmer 2 weiter (Schritt C). In einem Schritt D können dem Ergebnis der erfolgreichen Authentifikation weitere Daten, wie Name, Adresse und/oder Kontonummer beigegeben werden. Die Bank bekommt nachfolgend die gesamte Information, insbesondere dass es sich bei dem Anrufer wirklich um den Kunden XY handelt. Damit ist die Transaktion komplett (Schritt E) und die Leitung 6, auf der ein Austausch vertraulicher Daten stattfinden soll, kann durchgeschaltet werden.

Das Schema nach Figur 2 verdeutlicht die Systematik der Authentifikation bei einer Online-Bestellung. Zunächst gibt der Teilnehmer 1 (Kunde) seine Bestellung auf einem PC 7 ein (Schritt A) und sendet sie über die Datenleitung 8 ab (Schritt B). Die Sendung wird automatisch von der Netzbox 3 abgefangen und aufgehalten, bis der Kunde 1 bei der Netzbox 3 anruft (Schritt C) und sich mittels seiner Stimme authentifiziert. Wie schon im Beispiel nach Figur 1 wird auch hier die Authentifikation vermittels eines Trust Centers 4 durchgeführt (Schritt D). das Ergebnis wird in diesem Fall zur Netzbox 3 zurückgesendet (Schritt E) und als Anhang an die elektronische Bestellung angehängt, die über den Weg 9 an den Empfänger geht. Damit ist die Transaktion komplett (Schritt F).

## Patentansprüche

1. Verfahren zur Authentifikation eines ersten Teilnehmers (1) gegenüber einem mit dem ersten Teilnehmer (1) in Kommunikationsverbindung befindlichen zweiten Teilnehmer (2), wobei sich einer der Teilnehmer unter Vorgabe der Kennung des anderen Teilnehmers mittels eines Endgerätes in ein Kommunikationsnetz einwählt und wobei über das Netz eine Verbindung zum Endgerät des anderen Teilnehmers aufgebaut wird,
**dadurch gekennzeichnet, dass** ein im Netz befindliches Authentifikationsmittel (3,4) angewählt wird, in dem persönliche Daten des ersten Teilnehmers (1) hinterlegt sind, dass das Authentifikationsmittel (3,4) im Rahmen der Verbindung zur Identifikation geeignete Daten des ersten Teilnehmers aufnimmt und durch einen Vergleich mit den gespeicherten Daten seine Identität abgleicht und dass das Authentifikationsmittel (3,4) dem zweiten Teilnehmer (2) die Identität des ersten Teilnehmers (1) bestätigt.

2. Verfahren nach Anspruch 1,
**dadurch gekennzeichnet, dass** de rerste Teilnehmer (1) ein Anrufer oder Absender ist, der sich mit einem Anruf oder dem Versenden einer Nachricht an den zweiten Teilnehmer (2) wendet, wobei die Identität des Anrufers oder Absenders festgestellt wird.

3. Verfahren nach Anspruch 1 oder 2,
**dadurch gekennzeichnet, dass** das Authentifikationsmittel (3,4) unmittelbar bei der Einwahl des ersten Teilnehmers (1) in das Netz oder nach Aufbau der Verbindung angewählt wird.

4. Verfahren nach einem der vorherigen Ansprüche,
**dadurch gekennzeichnet, dass** das Einschalten des Authentifikationsmittels (3,4) in die Leitung zwischen beiden Teilnehmern automatisch vorgenommen wird.

5. Verfahren nach einem der vorherigen Ansprüche,
**dadurch gekennzeichnet, dass** die Authentifikation über eine in die Leitung geschaltete und dem Teilnehmer zugeordnete Box (3) geschieht, die über eine elektronische Adresse erreichbar ist.

6. Verfahren nach Anspruch 5,
**dadurch gekennzeichnet, dass** die zur Authentifikation benötigten Schritte über ein Trust-Center (4) vorgenommen werden, in dem die relevanten Daten gespeichert sind und das den Abgleich vornimmt, wobei das Trust-Center von der Box angewählt wird.

7. Verfahren nach einem der vorherigen Ansprüche,
**dadurch gekennzeichnet, dass** die Authentifikation vermittels der Stimme des Teilnehmers durchgeführt wird, wobei der Abgleich mit einer gespeicherten Stimmprobe oder charakteristischen Parametern einer Stimmprobe geschieht.

8. Verfahren nach Anspruch 7,
**dadurch gekennzeichnet, dass** das Authentifikationsmittel (3,4) in einer Trainingsphase initialisiert wird, wobei ein Stimmabdruck des Teilnehmers erstellt wird, der die spezifischen Eigenschaften repräsentiert.

9. Verfahren nach einem der vorherigen Ansprüche,
**dadurch gekennzeichnet, dass** der Adressat von der Box eine Zertifizierungsmitteilung erhält, die insbesondere den Namen, die Adresse und/oder die Personalausweisnummer des Teilnehmers enthält.

10. Verfahren nach Anspruch 9,
**dadurch gekennzeichnet, dass** die Zertifizierungsmitteilung über eine separate Verbindung, insbesondere via Fax oder E-Mail, verschickt wird.

11. Verfahren nach einem der vorherigen Ansprüche,
**dadurch gekennzeichnet, dass** elektronische Nachrichten in der Box abgelegt werden, wobei deren Weiterleitung veranlasst wird, nachdem der zu authentifizierende Teilnehmer die Box angewählt und sich gegenüber der Box identifiziert hat.

12. System, insbesondere zur Durchführung des Verfahrens nach einem der vorherigen Ansprüche, aufweisend ein Kommunikationsnetz und an das Netz angeschlossene und über eine Kennung anwählbare Endgeräte, wobei Mittel zur Authentifikation vorhanden sind, welche die Identität eines über ein Endgerät kommunizierenden Teilnehmers gegenüber einem anderen über ein Endgerät kommunizierenden Teilnehmer (1,2) zertifiziert,
**dadurch gekennzeichnet, dass** das Mittel zur Authentifikation (3,4) auf einem im Netz befindlichen Rechner realisiert ist und über eine einem Teilnehmer zugeordnete Adresse anwählbar ist, wobei über das Mittel persönliche Daten des Teilnehmers zugänglich sind, die zum Abgleich mit zur Identifikation geeigneten Daten dienen, die von dem zu authentifizierenden Teilnehmer eingebbar sind, wobei das Authentifikationsmittel dem anderen Teilnehmer die Identität des zu authentifizierenden Teilnehmers bestätigt.

13. Verfahren nach Anspruch 12,
**gekennzeichnet durch** ein mit dem Mittel in Verbindung stehenden Trust Center, in dem die persönlichen Daten des Teilnehmers hinterlegt sind.
